# EUROPEAN PATENT APPLICATION

(11) **EP 4 502 845 A1**
(43) Date of publication of application: **05.02.2025**
(21) Application number: 23188569.0
(22) Date of filing: 31.07.2023
(51) Int. Cl.: G06F 21/60, H04L 9/40

(54) **COMPUTER-IMPLEMENTED METHOD, COMPUTER PROGRAM PRODUCT AND APPARATUS FOR PROCESSING DATA USAGE POLICIES**

(71) Applicant: Siemens Aktiengesellschaft, 80333 München (DE)
(72) Inventor: Stahnke, Susanne, 84547 Emmerting (DE); Dimitrov, Dimitar, 80636 München (DE); Scharinger, Boris, 90762 Fürth (DE); Singh, Saurabh Narayan, 81739 München (DE)
(74) Representative: Siemens Patent Attorneys

(57) **Abstract**

A computer-implemented method for processing usage policies is proposed. The method including:
a) creating a first identity for a first entity and a second identity for a second entity,
b) implementing implementation-neutral usage policies based on implementation-neutral policy templates,
c) transforming the implemented implementation-neutral usage policies in dependence on characteristics of a target system into implementation-specific usage policies including multiple types of usage policy components, and
d) selecting in dependence on a role and/or attributes respectively assigned to the created first and second identities and a workflow to be performed by the first and second entity in the target system, one type or multiple types of usage policy components, composing the selected type or multiple types of usage policy components and integrating the composed usage policy component into the target system.

## Description

The present invention relates to a computer-implemented method and a computer program product for processing data usage policies in a communication system. Further, the present invention relates to an apparatus for processing data usage policies in a communication system.

Role-Based Access Control and Attribute-Based Access Control are well known mechanisms to enable access and usage control based on roles and/or attributes. These mechanisms support static user access and implementation of fixed data usage control policies.

Today, data sharing and trading, and therefore data usage control is solely based on legal contracts or statically defined and enforced data usage policies (attached to data), which require a certain level of trust. Well-known solutions provide a restricted set of static policy patterns, which are directly attached to the data.

It is one object of the present invention to improve the processing of data usage policies in a communication system.

According to a first aspect, a computer-implemented method for processing data usage policies in a communication system including a certain target system, a determined entity and multiple legal entities is proposed. The method includes:
a) creating at least a first identity for a first legal entity of the multiple legal entities and a second identity for a second legal entity of the multiple legal entities,
b) implementing implementation-neutral data usage policies based on implementation-neutral policy templates stored in a template library of the communication system,
c) transforming the implemented implementation-neutral data usage policies in dependence on characteristics of the certain target system into implementation-specific data usage policies including multiple different types of data usage policy components, and
d) selecting, by the determined entity, in dependence on a specific role and/or specific attributes respectively assigned to the created first and second identities and a specific workflow to be performed by the first and second legal entities in the certain target system, one type or multiple types of data usage policy components out of the multiple different types, composing the selected type or multiple types of data usage policy components together for obtaining a composed data usage policy component and integrating the composed data usage policy component into the certain target system.

According to the first aspect, the processing of data usage policies in a communication system is improved since a dynamic implementation of implementation-neutral data usage policies and a dynamic generation of implementation-specific data usage policies is possible and at the same time, the implementation-specific data usage policies are divided into multiple different types of data usage policy components, which can be flexibly composed and integrated into the certain target system and within the certain target system based on the specific workflow to be performed by the first and the second legal entity.

Hence, the computer-implemented method according to the first aspect allows to assign access to certain data sets (a resource) in the certain target system based on the workflow and/or tasks the certain legal entity (first and second legal entity) must perform and based on the implementation-specific data usage policies generated based on characteristics of the certain target system.

Further, implemented implementation-neutral data usage policies are based on a formal language and can be automatically verified by means of the formal language such as first order logic. This improves the access safety of the communication system. This has the further advantage that a workflow-aware data usage policy control is possible, in which the data usage policies are controlled based on the workflow (or task) the first and the second legal entity must perform.

In addition, the dynamic data usage policy generation according to the computer-implemented method according to the first aspect has the following technical effects and/or advantages:
- Allowing a dynamic generation of implementation-neutral and implementation-specific data usage policies and a division of the implementation-specific data usage policies into multiple different types of data usage policy components (also called: "snippets"). In contrast, the prior art only discloses a restricted set of static policy patterns, which are directly attached to data, and can therefore not be dynamically adjusted to certain roles, attributes and/or workflows;
- Allowing a flexible composition (combination) of the various components of a data usage policy since the implementation-specific data usage policies are divided into different types of data usage policy components. This also allows a fine-grained data usage policy control;
- Allowing the adaptability of the implementation-neutral and implementation-specific data usage policies in case of errors or unforeseeable events. In contrast, the prior art only discloses static definitions and implementations of data usage policies which cannot be adapted in case of violations or errors.

In particular, a computer-implemented method is a method which utilizes a computer, a computer network or another programmable device, wherein one or multiple features are wholly or partially realized by means of a computer program. Preferably, data usage policies or data usage guidelines are a compulsory legal disclosure of how an operator of a resource, for example, the determined entity, collects, retains and shares personally identifiable information corresponding to a legal entity (first and/or second legal entity) which wants to have access to this resource. Personally identifiable information can be embodied as data owner consent.

Specifically, the determined entity is a user or a computer which is operated by the user. The determined entity can be an operator or an operating computer which controls the access to the resource via a policy enforcement point of the certain target system of the communication system.

A legal entity, for example the first or the second legal entity, is a person or an organization. The communication system can include multiple legal entities which want to have access to the resource.

An example of a first or a second identity is a specific name for the first or the second legal entity. A specific role assigned to the certain legal entity (first or second legal entity) can be the job role of the certain legal entity, for example, whether the certain legal entity is an employee in the accounting, sales or engineering department. Specific attributes can include a qualification or an education the certain legal entity has. For example, if the certain target system is embodied as a blockchain, the first and the second legal entity or the first and second identities have to reach a consensus for accessing the resource and/or sharing the resource (data sharing).

For example, implementation-neutral data usage policies are implemented independently from the target system, in particular independently from the target language of the target system. Further, the implementation-neutral data usage policies can also include multiple different types of data usage policy components.

In particular, implementation-neutral policy templates can include information described in natural language. Preferably, implementation-neutral policy templates are used to specify components of data usage policies in an implementation-neutral way. Each component of the implementation-neutral data usage policies can be defined separately and independent from the other components. Creating inter-linked components is also possible.

Preferably, the implementation-specific data usage policies are machine-readable. Further, the implementation-specific data usage policies can also be embodied as implementation-specific data usage policy files. In other words, the implementation-neutral data usage policies are transformed into an implementation-specific data usage policy representation which corresponds to the certain target system. For example, implementation-specific data usage policies are generated in dependence on the certain target system, in particular in dependence on the target language of the certain target system.

A specific workflow can also be defined as a specific task or a specific operation a certain legal entity has to perform in the certain target system, for example a data sharing for a specific purpose.

In particular, the term "integrating" can be understood to as "deploying" the composed data usage policy component.

Specifically, the composed data usage policy component in the certain target system also includes multiple types of data usage policy components which are individually accessible and combinable in the certain target system among each other in order to create or compose other combinations of the multiple types of data usage policy components.

According to an embodiment, step a) further includes:
assigning a specific role and/or specific attributes to the created first identity corresponding to the first legal entity and/or to the created second identity corresponding to the second legal entity.

According to a further embodiment, step d) further includes:
selecting, by the determined entity, in dependence on the specific workflow to be performed by the first and second legal entity in the certain target system, one type or multiple types of data usage policy components out of the multiple different types.

According to a further embodiment, the method further includes:
e) performing an access scheme for accessing a resource in the certain target system by the first legal entity and the second legal entity in dependence on the integrated composed data usage policy component.

The performing of the access scheme includes an examination in dependence on the integrated composed data usage policy component whether the first legal entity and the second legal entity is allowed to have access to the resource or not. If a result of the examination is positive, then the certain legal entity is allowed to have access to the resource, if it is negative, then the access to the resource is denied.

A resource can be industrial data in an automation plant. Industrial data includes data points of a certain machine, sensors and/or actors as well as IoT data. Further, a resource can be a software, a website or a service, in particular a microservice.

According to a further embodiment, step c) further includes:
storing the implementation-specific data usage policies in a policy library of the communication system.

According to a further embodiment, step c) further includes:
if a specific event is detected, updating the multiple different types of data usage policy components based on newly defined data usage policy components and/or based on existing data usage policy components stored in the policy library, wherein the specific event is an error in the communication system, a violation of a policy or an unforeseen event.

In particular, the determined entity can either define new data usage policy components and generate them or load existing ones from the policy library.

According to a further embodiment, the method further includes:
f) adapting, at a specific timepoint, at least one of the implemented implementation-neutral data usage policies by means of a policy adaption point, wherein the specific timepoint is embodied as a first timepoint during the runtime of the communication system or as a second timepoint prior to the runtime of the communication system.

Preferably, the determined entity can use the policy adaptation point to perform the adapting according to step f). If the required data usage policy component is not available yet, the determined entity can specify and generate new data usage policy components or load and integrate existing ones from the policy library.

According to a further embodiment, step c) further includes:
tracing the updated multiple different types of data usage policy components for obtaining a first tracing result and storing the obtained first tracing result in the policy library,
wherein step f) further includes:
tracing the adapted at least one of the implemented implementation-neutral data usage policies for obtaining a second tracing result and storing the obtained second tracing result in the policy library.

The tracing and storing of the above policy components and policies has the advantage that at every time point, every update, every change or adaption is documented and stored. This improves the traceability of changes, which in turn increases the IT-security in the communication system.

According to a further embodiment, the characteristics of the certain target system include the target language, in particular a target programming language, of the certain target system.

Preferably, the target language is implementation-specific or specific for the certain target system.

According to a further embodiment, step c) further includes:
transforming the implemented implementation-neutral data usage policies and an implementation-neutral language of the implementation-neutral templates in dependence on characteristics of the certain target system into implementation-specific data usage policies and into the target language of the certain target system.

According to a further embodiment, the certain target system is embodied as a blockchain, and the implementation-specific data usage policies are embodied as smart contracts.

This has the advantage that the computer-implemented method according to the first aspect or embodiments of the first aspect can be implemented in various technical access control systems for controlling the access to the resource. This improves the flexibility of the computer-implemented method according to the first aspect or embodiments of the first aspect.

Preferably, the certain target system includes a policy enforcement point and the resource.

Further, the certain target system can be embodied as a Structured Query Language database.

According to a further embodiment, a certain one of the implementation-specific data usage policies includes information about a purpose, participants, a duration and/or license characteristics of the resource.

In addition, a certain one of the implementation-specific data usage policies further includes information about obligations from a data provider side (provider of the resource) such as a description of data, quality of data, a termination and/or penalties in case of a violation.

According to a further embodiment, the purpose indicates the purpose of a data sharing of the certain one implementation-specific data usage policy, the participants indicate all legal entities which participate in the certain one implementation-specific data usage policy, the duration indicates a period during which the certain one implementation-specific data usage policy is active and valid and the license characteristics indicate the conditions for using the resource.

For example, the multiple different types of data usage policy components can include a first type of data usage policy components, which can include information about the purpose, a second type of data usage policy components, which can include information about participates, a third type of data usage policy components, which can include information about the duration and/or a fourth type of data usage policy components, which can include information about license characteristics of the resource.

According to a further embodiment, the communication system is implemented within an automation plant or as an automation plant, wherein the automation plant is a plant from the process industry, the chemical industry, the pharmaceutical industry, the petrochemical industry, from the mobility industry, such as a railroad control system, from the manufacturing and production industry or a plant from the food and beverage industry or the automation plant is an energy generation plant, such as e.g. a wind power plant, a solar power plant or a power plant and/or as a power distribution plant. Further, communication system can be implemented as or within an Enterprise Resource Planning system. Also, the communication system can be implemented as a digital twin for sharing and/or implementing digital twins.

Any embodiment of the first aspect may be combined with any embodiment of the first aspect to obtain another embodiment of the first aspect.

According to a second aspect, a computer program product comprising a program code for executing the computer-implemented method according to the first aspect or embodiments of the first aspect when run on at least one computer is proposed.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, an apparatus for processing data usage policies in a communication system including a certain target system, a determined entity and multiple legal entities is proposed. The apparatus includes:
a creation unit for at least creating a first identity for a first legal entity of the multiple legal entities and a second identity for a second legal entity of the multiple legal entities,
an implementation unit for implementing implementation-neutral data usage policies based on implementation-neutral policy templates stored in a template library of the communication system,
a transformation unit for transforming the implemented implementation-neutral data usage policies in dependence on characteristics of the certain target system into implementation-specific data usage policies including multiple different types of data usage policy components, and
a selection unit for selecting in dependence on a specific role and/or specific attributes respectively assigned to the created first and second identities and a specific workflow to be performed by the first and second legal entities in the certain target system, one type or multiple types of data usage policy components out of the multiple different types, for composing the selected type or multiple types of data usage policy components together for obtaining a composed data usage policy component and for integrating the composed data usage policy component into the certain target system.

The respective entity or unit, e.g., the implementation unit, the transformation unit, the determined entity, or the certain legal entity, may be implemented in hardware and/or in software. If said entity or unit is implemented in hardware, it may be embodied as a device, e.g., as a computer or as a processor or as a part of a system, e.g., a computer system. If said entity or unit is implemented in software it may be embodied as a computer program product, as a function, as a routine, as a program code or as an executable object.

The technical effects and advantages described for the computer-implemented method according to the first aspect apply equally to the apparatus according to the third aspect. Further, embodiments and features described with reference to the computer-implemented method according to the first aspect apply mutatis mutandis to the apparatus according to the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Fig. 1: shows a schematic block diagram of a computerimplemented method for processing data usage policies;
- Fig. 2: shows a schematic flow chart of the computerimplemented method for processing data usage policies according to Fig. 1; and
- Fig. 3: shows a schematic block diagram of an apparatus for processing data usage policies.

In the Figures, like reference numerals designate like or functionally equivalent elements, unless otherwise indicated.

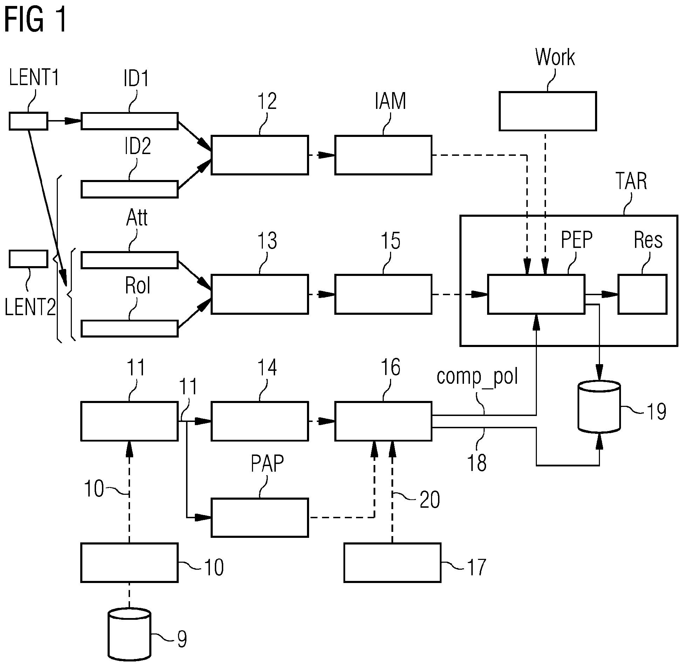

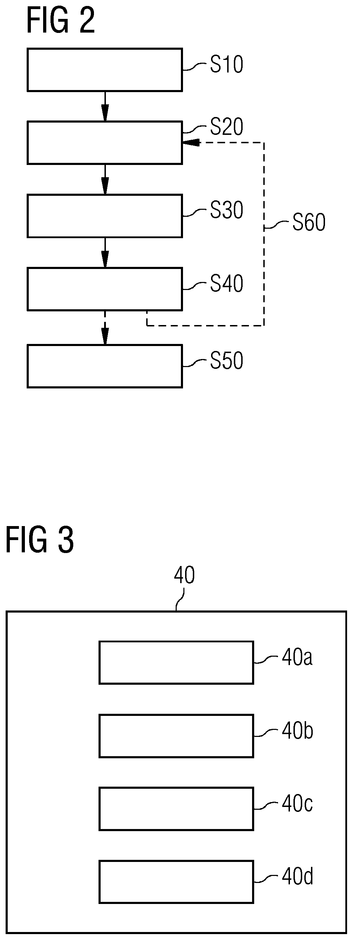

Fig. 1 shows a schematic block diagram of a computer-implemented method for processing data usage policies in a communication system 1 including a certain target system TAR, a determined entity and multiple legal entities. In Fig. 1, the certain target system TAR is embodied as a blockchain. In addition, references to the method steps of Fig. 2, which describes a computer-implemented method for processing data usage policies are indicated in parentheses in the following explanations of Fig. 1.

Further, in Fig. 1, the communication system 1 is implemented within an automation plant or as an automation plant. In embodiments, the automation plant is a plant from the process industry, the chemical industry, the pharmaceutical industry, the petrochemical industry, from the mobility industry, such as a railroad control system, from the manufacturing and production industry or a plant from the food and beverage industry or the automation plant is an energy generation plant, such as e.g., a wind power plant, a solar power plant or a power plant and/or as a power distribution plant (not shown).

Moreover, the schematic block diagram of Fig. 1 shows a template library 9, implementation-neutral policy templates 10, implementation-neutral data usage policies 11, an identity adapter 12, a role adapter 13, a policy adapter 14, a role management 15, a policy generator 16, a language adapter 17, a (implementation-specific) policy library 19, an identity and access management unit IAM, a certain legal entity LENT, a policy adaption point PAP, a policy enforcement point PEP and a resource Res. In the following, the interaction of the respective blocks of the schematic block diagram of Fig. 1 is explained.

First, a first identity ID1 for a first legal entity LENT1 of the multiple legal entities is created. Second, a second identity ID2 for a second legal entity LENT2 of the multiple legal entities is created. Then, a specific role Rol and/or specific attributes Att are respectively assigned to the created first identity ID1 corresponding to the first legal entity LENT1 and to the created second identity ID2 corresponding to the second legal entity LENT2 (see also method step S10 of Fig. 2). Furthermore, a respective identity is created and a specific role Rol and/or specific attributes Att are assigned for all multiple legal entities which participate in the communication system 1.

Then, the created identities ID1 and ID2 are inputted via the identity adapter 12 into the identity and access management unit IAM. The identity and access management unit IAM then processes the created identities ID1 and ID2 and inputs the processed created identities ID1 and ID2 into the policy enforcement point PEP which is later described in detail. In the same way, the specific role Rol and the specific attributes Att respectively assigned to the created first identity ID1 and the created second identity ID1 are inputted via the role adapter 13 into the role management 15. The role management 15 then processes the respective specific role Rol and the specific attributes Att and inputs the processed respective specific role Rol and the specific attributes Att also into the policy enforcement point PEP.

Next, implementation-neutral data usage policies 11 are implemented based on implementation-neutral policy templates 10 stored in a template library 9 of the communication system 1 (see also method step S20 of Fig. 2). In other words, various components of implementation-neutral data usage policies 11 are defined and stored. This is shown in Fig. 1 by the blocks with the reference signs 9, 10 and 11.

Then, these implemented implementation-neutral data usage policies 11 are inputted via the policy adapter 14 to the policy generator 16. Subsequently, the policy generator 16, which also corresponds to the transformation unit 40c in Fig. 3, transforms the implemented implementation-neutral data usage policies 11 in dependence on characteristics of the certain target system TAR into implementation-specific, machine-readable data usage policies 18 including multiple different types of data usage policy components (see also method step S30 of Fig. 2). In Fig. 1, the implementation-specific data usage policies 18 are embodied as smart contracts.

In addition, in method step S30 of Fig. 2, the implementation-specific data usage policies 18 are stored in a policy library 19 of the communication system 1.

Moreover, in method step S30 of Fig. 2, if a specific event is detected, the multiple different types of data usage policy components are updated based on newly defined data usage policy components and/or based on existing data usage policy components stored in the policy library 19. A specific event is an error in the communication system 1, a violation of a policy or an unforeseen event. Then, the updated multiple different types of data usage policy components are traced for obtaining a first tracing result and the obtained first tracing result is stored in the policy library 19.

Further, the characteristics of the certain target system TAR include the target language 20, in particular a target programming language, of the certain target system TAR. Thus, in Fig. 1, the target language 20 of the certain target system TAR is inputted via the language adapter 17 into the policy generator 16. Then, within the above transforming step according to step S30, the implemented implementation-neutral data usage policies 11 are also transformed into the target language 20 of the certain target system TAR.

In addition, a certain one of the implementation-specific data usage policies 18 includes information about a purpose, participants, a duration and/or license characteristics of a resource Res (certain data sets). Here, the purpose indicates the purpose of a data sharing of the certain one implementation-specific data usage policy. The participants indicate all legal entities which participate in the certain one implementation-specific data usage policy. Moreover, the duration indicates a period during which the certain one implementation-specific data usage policy is active and valid. At least, the license characteristics indicate the conditions for using the resource.

Then, the determined entity selects in dependence on a specific role Rol and/or specific attributes Att respectively assigned to the created first and second identities ID1, ID2 and a specific workflow Work to be performed by the first and second legal entities LENT1, LENT2 in the certain target system TAR, one type or multiple types of data usage policy components out of the multiple different types. Then, the determined entity composes the selected type or multiple types of data usage policy components together for obtaining a composed data usage policy component comp_pol and integrates the composed data usage policy component comp_pol into the certain target system TAR (see also method step S40 of Fig. 2).

The certain target system TAR includes in Fig. 1 the policy enforcement point PEP and a resource Res. Furthermore, as shown in Fig. 1, the composed data usage policy component comp_pol is outputted from the policy generator 16 and inputted to the policy enforcement point PEP. In addition, the policy generator 16 also corresponds to the selection unit 40d in Fig. 3. Further, in Fig. 1, the specific workflow Work is inputted into the policy enforcement point PEP.

Moreover, the policy enforcement point PEP performs an access scheme for accessing the resource Res in the certain target system TAR by the first legal entity LENT1 and the second legal entity LENT2 in dependence on the integrated composed data usage policy component (see also method step S50 of Fig. 2) .

Besides, according to method step S60, which is described in Fig. 2, the policy adaption point PAP can be used by the determined entity for adapting the at least one of the implemented implementation-neutral data usage policies 11.

Fig. 2 shows a schematic flow chart of the computer-implemented method for processing data usage policies in a communication system 1 (see Fig. 1) including a certain target system TAR (see Fig. 1), a determined entity and multiple legal entities according to Fig. 1. The respective method steps S10 - S40 of the computer-implemented method have already been explained above in terms of Fig. 1, which is why, in order to avoid repetitions, the method steps S10 - S40 are not explained again. Further, embodiments of the computer-implemented method of Fig. 2 include the method steps S50 and S60, which is why method steps S50 and S60 are connected with the method steps S10 - S40 in Fig. 2 with a respective dotted line. Method step S50 has already explained in Fig. 1.

Method step S60 in Fig. 2 includes the step:
adapting, at a specific timepoint, at least one of the implemented implementation-neutral data usage policies 11 (see Fig. 1) by means of a policy adaption point PAP (see Fig. 1).

Furthermore, the specific timepoint is embodied as a first timepoint during the runtime of the communication system 1 (see Fig. 1) or as a second timepoint prior to the runtime of the communication system 1.

Moreover, method step S60 further includes:
tracing the adapted at least one of the implemented implementation-neutral data usage policies 11 for obtaining a second tracing result and storing the obtained second tracing result in the policy library 19 (see Fig. 1).

Fig. 3 shows a schematic block diagram of an apparatus 40 for processing data usage policies in a communication system 1 (see Fig. 1) including a certain target system TAR (see Fig. 1), a determined entity and multiple legal entities. The apparatus 40 includes a creation unit 40a, an implementation unit 40b, a transformation unit 40c and a selection unit 40d.

The creation unit 40a is configured to create a first identity ID1 (see Fig. 1) for a first legal entity LENT1 (see Fig. 1) of the multiple legal entities and to create a second identity ID2 (see Fig. 1) for a second legal entity LENT2 (see Fig. 1) of the multiple legal entities. Further, the creation unit 40a is configured to respectively assign a specific role Rol (see Fig. 1) and/or specific attributes Att (see Fig. 1) to the created first identity ID1 corresponding to the first legal entity LENT1 and to the created second identity ID2 corresponding to the second legal entity LENT2.

Further, the implementation unit 40b is configured to implement implementation-neutral data usage policies 11 (see Fig. 1) based on implementation-neutral policy templates 10 (see Fig. 1) stored in a template library 9 (see Fig. 1) of the communication system 1.

Moreover, the transformation unit 40c is configured to transform the implemented implementation-neutral data usage policies 11 in dependence on characteristics of the certain target system TAR into implementation-specific data usage policies 18 (see Fig. 1) including multiple different types of data usage policy components.

Then, the selection unit 40d is configured to select in dependence on the specific role Rol and/or the specific attributes Att respectively assigned to the created first and second identities ID1, ID2 and a specific workflow Work (see Fig. 1) to be performed by the first and second legal entities LENT1, LENT2 in the certain target system TAR, one type or multiple types of data usage policy components out of the multiple different types, to compose the selected type or multiple types of data usage policy components together for obtaining a composed data usage policy component comp_pol (see Fig. 1) and to integrate the composed data usage policy component comp_pol into the certain target system TAR.

Although the present invention has been described in accordance with preferred embodiments, it is obvious for the person skilled in the art that modifications are possible in all embodiments.

### Reference Numerals:

- 1: communication system
- 9: template library
- 10: implementation-neutral policy templates
- 11: implementation-neutral data usage policies
- 12: identity adapter
- 13: role adapter
- 14: policy adapter
- 15: role management
- 16: policy generator
- 17: language adapter
- 18: implementation-specific data usage policies
- 19: policy library
- 20: target language
- 40: apparatus
- 40a: creation unit
- 40b: implementation unit
- 40c: transformation unit
- 40d: selection unit

- Att: specific attributes
- comp_pol: composed data usage policy component
- IAM: identity and access management unit
- ID1: first identity
- ID2: second identity
- LENT1: first legal entity
- LENT2: second legal entity
- PAP: policy adaption point
- PEP: policy enforcement point
- Res: resource
- Rol: specific role
- S10 - S60: method steps
- TAR: certain target system
- Work: specific workflow

## Claims

1. Computer-implemented method for processing data usage policies in a communication system (1) including a certain target system (TAR), a determined entity and multiple legal entities, the method including:
a) creating (S10) at least a first identity (ID1) for a first legal entity (LENT1) of the multiple legal entities and a second identity (ID2) for a second legal entity (LENT2) of the multiple legal entities,
b) implementing (S20) implementation-neutral data usage policies (11) based on implementation-neutral policy templates (10) stored in a template library (9) of the communication system (1),
c) transforming (S30) the implemented implementation-neutral data usage policies (11) in dependence on characteristics of the certain target system (TAR) into implementation-specific data usage policies (18) including multiple different types of data usage policy components, and
d) selecting (S40), by the determined entity, in dependence on a specific role (Rol) and/or specific attributes (Att) respectively assigned to the created first and second identities (ID1, ID2) and a specific workflow (Work) to be performed by the first and second legal entities (LENT1, LENT2) in the certain target system (TAR), one type or multiple types of data usage policy components out of the multiple different types, composing the selected type or multiple types of data usage policy components together for obtaining a composed data usage policy component (comp_pol) and integrating the composed data usage policy component (comp_pol) into the certain target system (TAR).

2. The method according to claim 1,
**characterized by**:
e) performing (S50) an access scheme for accessing a resource (Res) in the certain target system (TAR) by the first legal entity (LENT1) and the second legal entity (LENT2) in dependence on the integrated composed data usage policy component.

3. The method according to claim 1 or 2,
**characterized in**
**that** step c) (S30) further includes:
storing the implementation-specific data usage policies (18) in a policy library (19) of the communication system (1) .

4. The method according to claim 3,
**characterized in**
**that** step c) (S30) further includes:
if a specific event is detected, updating the multiple different types of data usage policy components based on newly defined data usage policy components and/or based on existing data usage policy components stored in the policy library (19), wherein the specific event is an error in the communication system (1), a violation of a policy or an unforeseen event.

5. The method according to one of claims 1 - 4, **characterized by**:
f) adapting (S60), at a specific timepoint, at least one of the implemented implementation-neutral data usage policies (11) by means of a policy adaption point (PAP), wherein the specific timepoint is embodied as a first timepoint during the runtime of the communication system (1) or as a second timepoint prior to the runtime of the communication system (1) .

6. The method according to claim 4 or 5,
**characterized in**
**that** step c) (S30) further includes:
tracing the updated multiple different types of data usage policy components for obtaining a first tracing result and storing the obtained first tracing result in the policy library (19),
wherein step f) (S60) further includes:
tracing the adapted at least one of the implemented implementation-neutral data usage policies (11) for obtaining a second tracing result and storing the obtained second tracing result in the policy library (19).

7. The method according to one of claims 1 - 6,
**characterized in**
**that** the characteristics of the certain target system (TAR) include the target language (20), in particular a target programming language, of the certain target system (TAR).

8. The method according to one of claims 1 - 7,
**characterized in**
**that** the certain target system (TAR) is embodied as a blockchain and the implementation-specific data usage policies (18) are embodied as smart contracts.

9. The method according to one of claims 1 - 8,
**characterized in**
**that** a certain one of the implementation-specific data usage policies (18) includes information about a purpose, participants, a duration and/or license characteristics of the resource.

10. The method according to claim 9,
**characterized in**
**that** the purpose indicates the purpose of a data sharing of the certain one implementation-specific data usage policy, the participants indicate all legal entities which participate in the certain one implementation-specific data usage policy, the duration indicates a period during which the certain one implementation-specific data usage policy is active and valid and the license characteristics indicate the conditions for using the resource.

11. The method according to one of claims 1 - 10,
**characterized in**
**that** the communication system (1) is implemented within an automation plant or as an automation plant, wherein the automation plant is a plant from the process industry, the chemical industry, the pharmaceutical industry, the petrochemical industry, from the mobility industry, such as a railroad control system, from the manufacturing and production industry or a plant from the food and beverage industry or the automation plant is an energy generation plant, such as e.g. a wind power plant, a solar power plant or a power plant and/or as a power distribution plant.

12. A computer program product comprising a program code for executing the computer-implemented method according to one of claims 1 - 11 when run on at least one computer.

13. Apparatus (40) for processing data usage policies in a communication system (1) including a certain target system (TAR), a determined entity and multiple legal entities, the apparatus (40) including:
a creation unit (40a) for at least creating a first identity (ID1) for a first legal entity (LENT1) of the multiple legal entities and for creating a second identity (ID2) for a second legal entity (LENT2) of the multiple legal entities,
an implementation unit (40b) for implementing implementation-neutral data usage policies (11) based on implementation-neutral policy templates (10) stored in a template library (9) of the communication system (1),
a transformation unit (40c) for transforming the implemented implementation-neutral data usage policies (11) in dependence on characteristics of the certain target system (TAR) into implementation-specific data usage policies (18) including multiple different types of data usage policy components, and
a selection unit (40d) for selecting in dependence on a specific role (Rol) and/or specific attributes (Att) respectively assigned to the created first and second identities (ID1, ID2) and a specific workflow (Work) to be performed by the first and second legal entities (LENT1, LENT2) in the certain target system (TAR), one type or multiple types of data usage policy components out of the multiple different types, for composing the selected type or multiple types of data usage policy components together for obtaining a composed data usage policy component (comp_pol) and for integrating the composed data usage policy component (comp_pol) into the certain target system (TAR).
